# EUROPÄISCHE PATENTANMELDUNG

(11) **EP 3 499 328 A1**
(43) Veröffentlichungstag der Anmeldung: **19.06.2019**
(21) Anmeldenummer: 17207063.3
(22) Anmeldetag: 13.12.2017
(51) Int. Cl.: G05B 19/4097, G05B 19/19

(54) **EFFIZIENTE HOCHGENAUE MODELLIERUNG VON MATERIALABTRAG**

(71) Anmelder: Siemens Aktiengesellschaft, 80333 München (DE)
(72) Erfinder: Köpken, Hans-Georg, 91056 Erlangen (DE); Platen, Stephan, 91349 Röttenbach (DE)

(57) **Zusammenfassung**

Ein Werkstück (2) wird mittels einer materialabtragenden Bearbeitung (z.B. Fräsen) durch ein Werkzeug (1) einer Werkzeugmaschine (z.B. CNC-Fräsmaschine) bearbeitet, wobei das Werkzeug (1) entlang einer Bahn verfahren wird. Bei dem erfindungsgemäßen Ermittlungsverfahren für Bereiche der Endkontur des Werkstücks (2) werden einer Recheneinrichtung (8) die für die Bearbeitungszeitpunkte gültigen Lagen (x, y, z) der Bahn zugeführt und das Werkstück mittels eines Dexelmodells modeliert. Das erfindungsgemäße Ermittlungsverfahren zeichnet sich dadurch aus, dass die Recheneinrichtung die Einwirkung des Werkzeugs (1) auf das Werkstück (2) nur für die vorbestimmten Gebiete (virtuelle Bereiche 11) ermittelt, und zwar mit hoher Ortsauflösung. Für Bereiche außerhalb der vorbestimmten Gebiete erfolgt hingegen entweder keine Ermittlung der Einwirkung oder es erfolgt zwar eine Ermittlung der Einwirkung, jedoch mit einer gröberen Ortsauflösung. Aufgrund des Umstands, dass in der Regel nur relativ kleine virtuelle Bereiche (11) spezifiziert werden, bleibt der Rechenaufwand daher handhabbar.

## Beschreibung

Die vorliegende Erfindung geht aus von einem Ermittlungsverfahren für Bereiche einer Endkontur eines realen Werkstücks, in die das reale Werkstück mittels einer materialabtragenden Bearbeitung durch ein reales Werkzeug einer Werkzeugmaschine zum Ende der Bearbeitung hin überführt wird, wobei zum Bearbeiten des realen Werkstücks das reale Werkzeug gesteuert von einer Steuereinrichtung der Werkzeugmaschine relativ zum realen Werkstück entlang einer Bahn verfahren wird, so dass das reale Werkzeug sich relativ zum realen Werkstück zu Bearbeitungszeitpunkten jeweils an einer jeweiligen Lage befindet.

Die vorliegende Erfindung geht weiterhin aus von einem Computerprogramm, das Maschinencode umfasst, der von einer einer Steuereinrichtung einer Werkzeugmaschine zugeordneten Recheneinrichtung unmittelbar abarbeitbar ist, wobei die Abarbeitung des Maschinencodes durch die Recheneinrichtung bewirkt, dass die Recheneinrichtung ein derartiges Ermittlungsverfahren ausführt.

Die vorliegende Erfindung geht weiterhin aus von einer einer Steuereinrichtung einer Werkzeugmaschine zugeordneten Recheneinrichtung, wobei die Recheneinrichtung mit einem derartigen Computerprogramm programmiert ist, so dass sie im Betrieb ein derartiges Ermittlungsverfahren ausführt.

Ermittlungsverfahren zum modellgestützten Ermitteln der Kontur eines Werkstücks sind allgemein bekannt. Sie werden beispielsweise in Form von sogenannten Materialabtragsmodellen implementiert. Diese Verfahren werden offline oder online und gegebenenfalls auch in Echtzeit mit der realen Bearbeitung des Werkstücks ausgeführt und im Rahmen der Kollisionsvermeidung angewandt. Im Rahmen eines derartigen Ermittlungsverfahrens werden die Positionen einer Recheneinrichtung zugeführt. Die Recheneinrichtung ermittelt für die Bearbeitungszeitpunkte unter anderem jeweils ein Schnittvolumen, in dem das reale Werkzeug auf das reale Werkstück einwirkt. Sie aktualisiert das Modellvolumen anhand des jeweiligen Schnittvolumens, so dass das verbleibende Modellvolumen mit dem verbleibenden Teil des realen Werkstücks zum jeweils betrachteten Bearbeitungszeitpunkt korrespondiert. Das jeweilige Schnittvolumen korrespondiert mit einem Umfang, zu dem das reale Werkzeug zum jeweiligen Bearbeitungszeitpunkt auf das Modellvolumen einwirkt.

Bei der spanenden Bearbeitung in Werkzeugmaschinen sollen oftmals Prozessgrößen zur Prozessoptimierung und zur Erkennung von Prozessabweichungen (beispielsweise durch Werkzeugverschleiß) genutzt werden. Zu diesem Zweck ist es erforderlich, anhand der erfassten Prozessgrößen ein Qualitätsmaß des fertigen Werkstücks zu ermitteln. Besonders vorteilhaft ist es hierbei, wenn anhand der erfassten Prozessgrößen Abmessungen des fertigen Werkstücks mit hoher Genauigkeit bestimmt werden können.

Prinzipiell ist für die Bestimmung der Abmessungen des fertigen Werkstücks ein derartiges Materialabtragsmodell geeignet. Übliche Materialabtragsmodelle weisen jedoch eine Ortsauflösung auf, die im Bereich von 0,1 mm oder darüber liegt, oftmals sogar nur im Bereich von 1 mm oder darüber. Für eine Kollisionsprüfung ist eine derartige Genauigkeit völlig ausreichend. Abmessungen des fertigen Werkstücks können jedoch ebenfalls nur mit dieser Genauigkeit bestimmt werden, die im Bereich der Ortsauflösung liegt, also insbesondere oberhalb von 100 µm. Dies ist für eine Vermessung des Werkstücks, bei der meist eine Genauigkeit von mindestens 0,1 mm gefordert wird, unzureichend. Oftmals wird sogar eine noch erheblich größere Genauigkeit gefordert, beispielsweise von 0,02 mm oder 0,01 mm.

Im Stand der Technik finden sich zwar Ausführungen zu den Vorteilen derartiger Vorgehensweisen. Praktische Realisierungen sind bisher jedoch nicht bekannt geworden.

Es ist prinzipiell denkbar, für derartige Aufgaben ein Materialabtragsmodell zu verwenden, mittels dessen die Bearbeitung des Werkstücks durch das Werkzeug mit einer höheren Genauigkeit modelliert wird, beispielsweise im Bereich von 10 µm oder noch genauer. Mit einem derartigen Materialabtragsmodell könnte eine entsprechend genaue Modellierung der Bearbeitung erfolgen. Die Bearbeitung könnte insbesondere deshalb hochgenau modelliert werden, weil die entsprechenden Lagen - unabhängig davon, ob es sich um Sollwerte oder um Istwerte handelt - mit hinreichender Genauigkeit vorgegeben werden bzw. erfasst werden können.

Der soeben skizzierte Ansatz stößt jedoch bereits bei relativ kleinen Werkstücken sehr schnell an praktische Grenzen, weil die zu verarbeitenden Datenmengen rapide ansteigen. Insbesondere eine Echtzeitfähigkeit ist nicht mehr zu erreichen.

Die Aufgabe der vorliegenden Erfindung besteht darin, Möglichkeiten zu schaffen, mittels derer auf einfache Weise eine hochgenaue Modellierung von zu vermessenden Bereichen der Endkontur des realen Werkstücks möglich ist.

Die Aufgabe wird durch ein Ermittlungsverfahren mit den Merkmalen des Anspruchs 1 gelöst. Vorteilhafte Ausgestaltungen des Ermittlungsverfahrens sind Gegenstand der abhängigen Ansprüche 2 bis 13.

Erfindungsgemäß wird ein Ermittlungsverfahren für Bereiche einer Endkontur eines realen Werkstücks geschaffen, in die das reale Werkstück mittels einer materialabtragenden Bearbeitung durch ein reales Werkzeug einer Werkzeugmaschine zum Ende der Bearbeitung hin überführt wird, wobei zum Bearbeiten des realen Werkstücks das reale Werkzeug gesteuert von einer Steuereinrichtung der Werkzeugmaschine relativ zum realen Werkstück entlang einer Bahn verfahren wird, so dass das reale Werkzeug sich relativ zum realen Werkstück zu Bearbeitungszeitpunkten jeweils an einer jeweiligen Lage befindet. Im Rahmen dieses Verfahrens ist vorgesehen,
a) dass die Recheneinrichtung die Lagen entgegennimmt,
b) dass die Recheneinrichtung für die Bearbeitungszeitpunkte jeweils ermittelt, ob und gegebenenfalls in welchem Umfang das reale Werkzeug zum jeweiligen Bearbeitungszeitpunkt auf vorbestimmte Gebiete des realen Werkstücks einwirkt, und den Gebieten zugeordnete virtuelle Bereiche entsprechend dem für das jeweilige Gebiet ermittelten Umfang aktualisiert, so dass die virtuellen Bereiche mit den jeweils verbleibenden Teilen der vorbestimmten Gebiete des realen Werkstücks zum jeweils betrachteten Bearbeitungszeitpunkt korrespondieren,
c) dass die Recheneinrichtung die virtuellen Bereiche mit einer ersten Ortsauflösung aktualisiert,
d) dass entweder die Recheneinrichtung außerhalb der virtuellen Bereiche nicht ermittelt, ob und gegebenenfalls in welchem Umfang das reale Werkzeug auf das jeweilige Gebiet des realen Werkstücks einwirkt,
e) oder die Recheneinrichtung in einem virtuellen Zusatzvolumen zwar ermittelt, ob und gegebenenfalls in welchem Umfang das reale Werkzeug auf das reale Werkstück einwirkt, und den virtuellen Zusatzbereich entsprechend dem für das dem virtuellen Zusatzbereich zugeordnete Gebiet ermittelten Umfang aktualisiert, so dass der virtuelle Zusatzbereich mit dem jeweils verbleibenden Teil des Gebiets des realen Werkstücks bis zum jeweils betrachteten Bearbeitungszeitpunkt korrespondiert, und
f) dass die Recheneinrichtung in dem Fall, dass sie den virtuellen Zusatzbereich aktualisiert, den virtuellen Zusatzbereich mit einer zweiten Ortsauflösung aktualisiert, die gröber als die erste Ortsauflösung ist.

Bei dem erfindungsgemäßen Ermittlungsverfahren werden der Recheneinrichtung also - so wie im Stand der Technik auch - die für die Bearbeitungszeitpunkte gültigen Lagen zugeführt (Merkmal a). Die Lage kann rein translatorisch bestimmt sein, also unabhängig von der Orientierung des Werkzeugs relativ zum Werkstück nur die Positionierung des Werkzeugs relativ zum Werkstück umfassen. Alternativ kann die Lage zusätzlich zur Positionierung auch die Orientierung mit umfassen. Das erfindungsgemäße Ermittlungsverfahren zeichnet sich dadurch aus, dass die Recheneinrichtung die Einwirkung nur für die vorbestimmten Gebiete ermittelt (Merkmale b), und zwar mit hoher Ortsauflösung (Merkmal c). Für Bereiche außerhalb der vorbestimmten Gebiete erfolgt hingegen entweder keine Ermittlung der Einwirkung (Merkmal d) oder es erfolgt zwar eine Ermittlung der Einwirkung (Merkmal e), jedoch mit einer gröberen Ortsauflösung (Merkmal f). Aufgrund des Umstands, dass in der Regel nur relativ kleine virtuelle Bereiche spezifiziert werden (also Bereiche, in denen mit der hohen ersten Ortsauflösung gearbeitet wird), bleibt der Rechenaufwand daher handhabbar.

Die virtuellen Bereiche und gegebenenfalls auch der virtuelle Zusatzbereich können prinzipiell auf beliebige Weise modelliert werden. Vorzugsweise modelliert die Recheneinrichtung die virtuellen Bereiche mittels eines jeweiligen Dexelmodells. In diesem Fall weist das jeweilige Dexelmodell eine Anzahl von Dexeln auf, die sich ausgehend von einer jeweiligen Stützstelle des jeweiligen Dexels in eine jeweilige Höhenrichtung erstrecken. Die jeweilige Höhenrichtung kann einheitlich für das jeweilige Dexelmodell sein. Alternativ kann die jeweilige Höhenrichtung innerhalb des jeweiligen Dexelmodells jeweils einheitlich für eine Gruppe von Dexeln sein oder individuell für das jeweilige Dexel bestimmt sein.

Im Rahmen der erfindungsgemäßen Ausgestaltung des Ermittlungsverfahrens ist es insbesondere möglich, dass die Recheneinrichtung Dexeln des jeweiligen Dexelmodells zu den Bearbeitungszeitpunkten jeweils nur einen einzelnen Höhenwert zuordnet. Es wird also für jedes Dexel sozusagen nur eine einzige Strecke betrachtet, deren einer Endpunkt die Stützstelle des entsprechenden Dexels ist und deren anderer Endpunkt durch den Höhenwert bestimmt ist. Vorzugsweise werden hierbei nur positive Höhenwerte zugelassen. Es wird also ausgehend von der Stützstelle des jeweiligen Dexels nur ein Strahl in der Höhenrichtung betrachtet, nicht aber eine Gerade.

Falls die Recheneinrichtung auch den virtuellen Zusatzbereich modelliert, modelliert sie ihn vorzugsweise mittels mindestens eines weiteren Dexelmodells, das eine Vielzahl von Säulen aufweist, die in einer Ebene in einem regelmäßigen zweidimensionalen Raster angeordnet sind und denen individuell in einer normal zur Ebene orientierten Richtung jeweils Höhenwerte zugeordnet sind. Besonders bevorzugt ist es hierbei, wenn die Recheneinrichtung den virtuellen Zusatzbereich mittels mehrerer Dexelmodelle modelliert und die Höhenrichtungen der weiteren Dexelmodelle paarweise linear unabhängig voneinander sind. Die Höhenrichtung in der Dexelmodelle können insbesondere paarweise orthogonal zueinander sein.

Vorzugsweise nimmt die Recheneinrichtung nulldimensionale, eindimensionale und/oder oder zweidimensionale Sonderzonen entgegen. In diesem Fall ermittelt die Recheneinrichtung die virtuellen Bereiche anhand der Sonderzonen und ordnet die virtuellen Bereiche den Sonderzonen zu. Dadurch ist die Vorgabe der virtuellen Bereiche besonders einfach. In der Regel wird hierbei eine 1:1-Zuordnung vorgenommen, dass also jeder Sonderzone jeweils genau ein virtueller Bereich zugeordnet wird.

"Nulldimensional" sind einzelne Punkte oder Gruppen von Punkten. "Eindimensional" sind Linien oder Kurven. "Zweidimensional" sind Flächen. Die Flächen müssen nicht notwendigerweise ebene Flächen sein, auch wenn dies möglich ist. Beispielsweise kann als Fläche ein Teil einer Ebene, eine Mantelfläche eines Zylinders oder ein Abschnitt einer derartigen Mantelfläche vorgegeben werden. Auch ein Teil einer Kugeloberfläche kann spezifiziert werden. Durch diese Vorgehensweise können sozusagen virtuelle Messstellen (Punkte, Linien oder Flächen) definiert werden, die nach dem Ermitteln der endgültigen virtuellen Bereiche virtuell vermessen werden können.

Die Sonderzonen sind vorzugsweise Bestandteile einer Soll-Endkontur, in welche das Werkstück durch die Bearbeitung mittels des Werkzeugs überführt werden soll. In diesem Fall ist es möglich, dass die Recheneinrichtung für Basisstellen der Sonderzonen jeweils eine Stützstelle eines Dexels eines Dexelmodells ermittelt, mittels dessen der jeweilige virtuelle Bereich modelliert wird. Die Ermittlung der Stützstellen erfolgt in diesem Fall derart, dass eine von einer jeweiligen Stützstelle ausgehende Höhenrichtung zur jeweiligen Basisstelle hin gerichtet ist und dass die Höhenrichtung orthogonal auf der Soll-Endkontur am Ort der jeweiligen Basisstelle ist. Dadurch ergibt sich mit verhältnismäßig geringem Aufwand eine sehr hohe Genauigkeit der Modellierung.

Aufgrund des Umstands, dass nur für die virtuellen Bereiche die Ermittlung und Aktualisierung mit der ersten Ortsauflösung erfolgt, bleibt - wie bereits erwähnt - der Rechenaufwand beschränkt. Dadurch ist es möglich, dass die Recheneinrichtung das Ermittlungsverfahren online und in Echtzeit parallel zur Bearbeitung des realen Werkstücks durch die Werkzeugmaschine ausführt.

Die erste Ortsauflösung ist vorzugsweise mindestens fünfmal so fein wie die zweite Ortsauflösung, besser sogar mindestens zehnmal so fein. Es sind auch noch größere Unterschiede möglich, beispielsweise ein Faktor von mindestens 30, ein Faktor von mindestens 50, ein Faktor von mindestens 80 oder ein Faktor von mindestens 100.

In absoluten Größen bildet die zweite Ortsauflösung in zwei Raumrichtungen vorzugsweise ein zweidimensionales Raster mit einem Rastermaß von mindestens 0,1 x 0,1 mm. Es sind auch noch gröbere Raster möglich, beispielsweise von mindestens 0,2 x 0,2 mm, mindestens 0,5 x 0,5 mm oder mindestens 1,0 x 1,0 mm. Hingegen bildet die erste Ortsauflösung gegebenenfalls in vergleichbaren Raumrichtungen vorzugsweise ein eindimensionales Raster mit einem Rastermaß von höchstens 50 µm oder ein zweidimensionales Raster mit einem Rastermaß von höchstens 50 x 50 µm. Es sind auch noch feinere Raster möglich, beispielsweise im zweidimensionalen Fall ein Raster von höchstens 20 x 20 µm oder von höchstens 10 x 10 µm. Auch noch geringere Werte sind möglich. Analoge Ausführungen gelten im eindimensionalen Fall.

Sowohl die erste als auch die zweite Ortsauflösung können der Recheneinrichtung fest vorgegeben sein. Alternativ können die erste und/oder die zweite Ortsauflösung der Recheneinrichtung im Rahmen der Ausführung des Ermittlungsverfahrens vorgegeben werden. Beispielsweise können sie zu Beginn des Ermittlungsverfahrens von einer Bedienperson spezifiziert werden.

In einer besonders bevorzugten Ausgestaltung der vorliegenden Erfindung nimmt die Recheneinrichtung von der Steuereinrichtung für die Bearbeitungszeitpunkte zusätzlich Werte entgegen, die für Lagefehler des realen Werkzeugs relativ zum realen Werkstück charakteristisch sind. In diesem Fall ist es möglich, dass die Recheneinrichtung den jeweiligen Lagefehler des realen Werkzeugs relativ zum realen Werkstück ermittelt und bei der Ermittlung, ob und gegebenenfalls in welchem Umfang das reale Werkzeug zum jeweiligen Bearbeitungszeitpunkt auf eines der vorbestimmten Gebiete des realen Werkstücks einwirkt, berücksichtigt. Dadurch kann innerhalb der virtuellen Bereiche eine optimierte Ermittlung der tatsächlichen Endkontur erfolgen.

In einer weiter bevorzugten Ausgestaltung der vorliegenden Erfindung nimmt die Recheneinrichtung von der Steuereinrichtung für die Bearbeitungszeitpunkte zusätzlich ein Antriebsmoment eines Spindelantriebs entgegen, mittels dessen eine das reale Werkzeug haltende Spindel rotiert wird. In diesem Fall ist es möglich, dass die Recheneinrichtung das Antriebsmoment des Spindelantriebs zumindest den jeweiligen virtuellen Bereichen zuordnet, in denen das reale Werkzeug zum jeweiligen Bearbeitungszeitpunkt auf eines der vorbestimmten Gebiete des realen Werkstücks einwirkt, und dass die Recheneinrichtung für diese Bereiche eine Aussage über die Oberflächenqualität der Endkontur ermittelt und der Endkontur zuordnet. Dadurch sind über die Maßhaltigkeit des Werkstücks hinaus zusätzliche Qualitätsaussagen über das Werkstück möglich.

Die Aufgabe wird weiterhin durch ein Computerprogramm mit den Merkmalen des Anspruchs 14 gelöst. Erfindungsgemäß bewirkt bei einem Computerprogramm der eingangs genannten Art die Abarbeitung des Maschinencodes durch die Recheneinrichtung, dass die Recheneinrichtung ein erfindungsgemäßes Ermittlungsverfahren ausführt.

Die Aufgabe wird weiterhin durch eine Recheneinrichtung mit den Merkmalen des Anspruchs 15 gelöst. Eine vorteilhafte Ausgestaltungen der Recheneinrichtung ist Gegenstand des abhängigen Anspruchs 16.

Erfindungsgemäß ist eine Recheneinrichtung der eingangs genannten Art mit einem erfindungsgemäßen Computerprogramm programmiert, so dass sie im Betrieb ein erfindungsgemäßes Ermittlungsverfahren ausführt.

Die Recheneinrichtung kann eine eigenständige, von der Steuereinrichtung der Werkzeugmaschine verschiedene Einrichtung sein. Vorzugsweise ist sie jedoch mit der Steuereinrichtung der Werkzeugmaschine identisch.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein erfindungsgemäßes System,
- FIG 2: ein Werkstück von der Seite,
- FIG 3: das Werkstück von FIG 2 von oben,
- FIG 4: ein Ablaufdiagramm,
- FIG 5: ein Werkstück mit Teilvolumina und Sonderbereichen von der Seite,
- FIG 6: das Werkstück von FIG 5 von oben,
- FIG 7: ein Dexelmodell des Werkstücks,
- FIG 8: ein weiteres Dexelmodell des Werkstücks,
- FIG 9: ein Dexelmodell eines virtuellen Bereichs,
- FIG 10: einen Ausschnitt eines Dexelmodells des Werkstücks,
- FIG 11: einen Ausschnitt eines Dexelmodells des Werkstücks,
- FIG 12: ein Ablaufdiagramm,
- FIG 13: ein Ablaufdiagramm und
- FIG 14: ein Ablaufdiagramm.

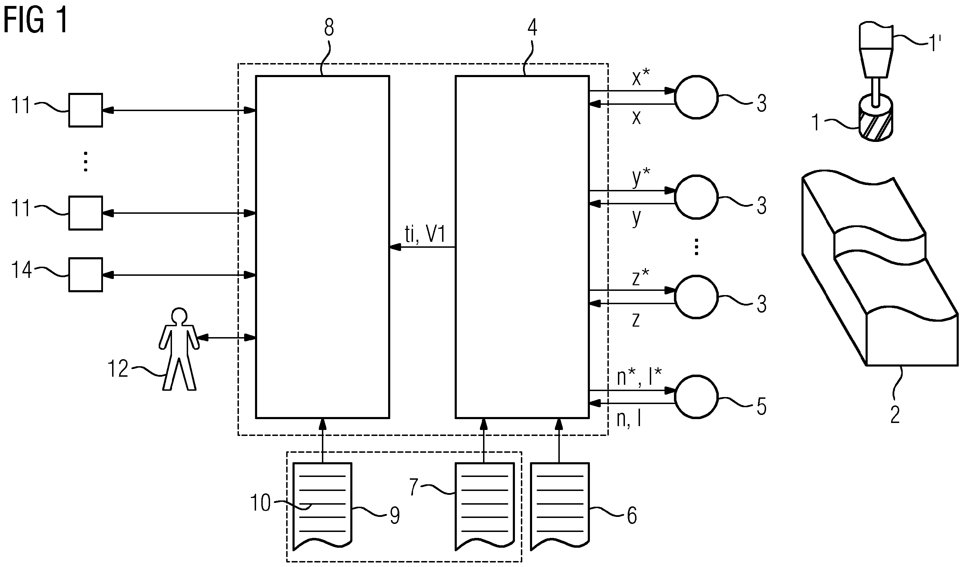

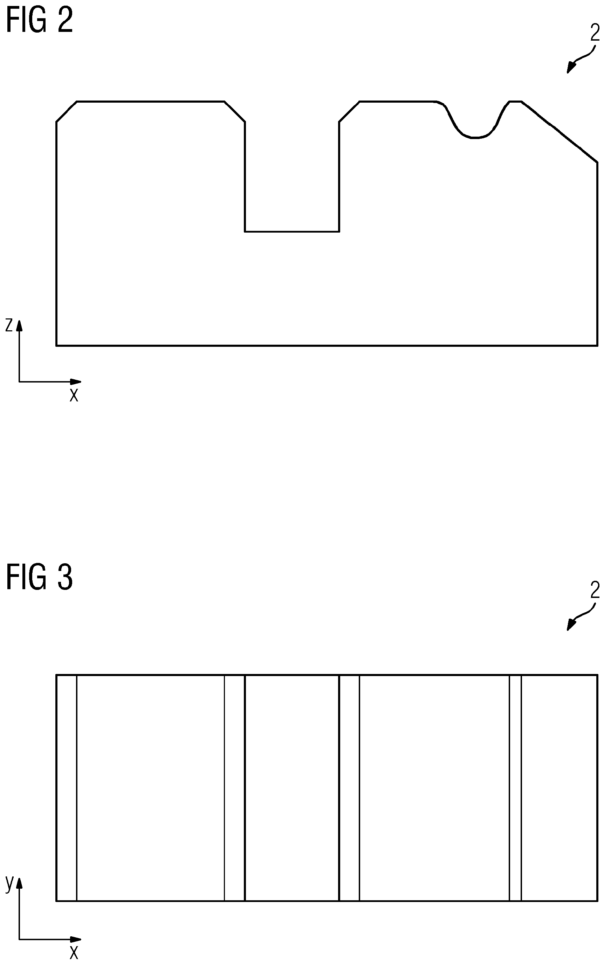

Gemäß FIG 1 weist eine Werkzeugmaschine ein Werkzeug 1 auf, mittels dessen ein Werkstück 2 materialabtragend bearbeitet werden soll. Beispielsweise kann eine spanende Bearbeitung erfolgen. Entsprechend einer spanenden Bearbeitung ist in FIG 1 das Werkzeug 1 als Fräser dargestellt. Zu Beginn der materialabtragenden Bearbeitung weist das Werkstück 2 ein Anfangsvolumen auf. Beispielsweise kann das Werkstück 2 quaderförmig ausgebildet sein. Durch den Materialabtrag wird das Werkstück 2 nach und nach in eine Endkontur überführt, beispielsweise in eine Endkontur, wie sie in den FIG 2 und 3 dargestellt ist.

Zum Einstellen der Lage des Werkzeugs 1 relativ zum Werkstück 2 und damit zum Durchführen der Bearbeitung weist die Werkzeugmaschine eine Anzahl an lagegeregelten Achsen 3 auf. Die Lage umfasst zumindest die Position des Werkzeugs 1 relativ zum Werkstück 2, also beispielsweise - bezogen auf ein rechtwinkliges kartesisches Koordinatensystem - die Koordinaten x, y, z. Gegebenenfalls kann die Lage zusätzlich auch die Orientierung des Werkzeugs 1 relativ zum Werkstück 2 umfassen. Minimal sind in der Regel drei lagegeregelte Achsen 3 vorhanden. Oftmals beträgt die Anzahl an lagegeregelten Achsen 3 vier oder fünf. Auch kleinere oder größere Anzahlen an lagegeregelten Achsen 3 sind jedoch möglich. Den lagegeregelten Achsen 3 werden von einer Steuereinrichtung 4 der Werkzeugmaschine entsprechende Folgen von Lagesollwerten vorgegeben. Die Steuereinrichtung 4 ist in der Regel als numerische Steuerung (CNC) ausgebildet.

Nachfolgend wird aus Gründen der einfacheren Darstellung angenommen, dass den lagegeregelten Achsen 3 als Lagesollwerte direkt die entsprechenden Sollpositionen x*, y* und z* in dem kartesischen Koordinatensystem vorgegeben werden. Die Begriffe "Lagesollwerte" und "Sollpositionen" werden daher nachfolgend synonym verwendet. Gegebenenfalls ist es jedoch auch möglich, dass die Lagesollwerte durch eine kinematische Transformation aus den Sollpositionen x*, y* und z* ermittelt werden müssen und/oder die Lagesollwerte zusätzlich auch die Orientierung des Werkzeugs 1 relativ zum Werkstück 2 mit umfassen. Weiterhin ist es möglich, dass aufgrund der kinematischen Transformation sich Positionierungen und Orientierungen gegenseitig beeinflussen. Auch ist es möglich, dass die Anzahl an Lagesollwerten - mit oder ohne Berücksichtigung von Orientierungen - eine von drei verschiedene Anzahl ist, beispielsweise vier oder fünf.

Die lagegeregelten Achsen 3 liefern entsprechende Lageistwerte x, y, z zurück. Hierbei besteht eine 1:1-Zuordnung zwischen Lagesollwerten x*, y* und z* und Lageistwerten x, y, z. Für jeden Lagesollwert x*, y* und z* liefern die lagegeregelten Achsen 3 also jeweils einen korrespondierenden Lageistwert x, y, z Rück Analog zur vorstehend angenommenen Äquivalenz von Lagesollwerten und Sollpositionen x*, y* und z* wird nachfolgend angenommen, dass die Lageistwerte direkt mit den Istpositionen x, y, z in dem kartesischen Koordinatensystem korrespondieren. Gegebenenfalls ist es jedoch erforderlich, die Istpositionen x, y, z durch eine zur vorgenannten kinematischen Transformation inverse kinematische Transformation aus den Lageistwerten zu ermitteln und/oder die Orientierung des Werkzeugs 1 relativ zum Werkstück 2 mit zu berücksichtigen.

Zum Antreiben des Werkzeugs 1 ist weiterhin eine drehzahlgeregelte Achse 5 vorhanden, also ein Spindelantrieb 5. Die drehzahlgeregelte Achse 5 wird von der Steuereinrichtung 4 mit einem entsprechenden Drehzahlsollwert n* gesteuert. Der Spindelantrieb 5 treibt eine rotierende Spindel 1' an, welche das Werkzeug 1 hält. Der Drehzahlsollwert n* kann alternativ auf den Antrieb der drehzahlgeregelten Achse 5 selbst oder auf das Werkzeug 1 bezogen sein. Oftmals wird dem Antrieb der drehzahlgeregelten Achse 5 weiterhin auch ein Stromsollwert I* vorgegeben. Die drehzahlgeregelte Achse 5 liefert der Steuereinrichtung 4 zumindest den korrespondierenden Drehzahlistwert n und oftmals auch den korrespondierenden Stromistwert I zurück. Die sensorische Erfassung von Drehzahl n und Strom I und hierauf aufbauend die Ermittlung von beispielsweise einem Drehmoment M des drehzahlgeregelten Antriebs bzw. des Werkzeugs 1 ist Fachleuten allgemein bekannt.

Die Folgen von Lagesollwerten x*, y*, z* bilden in ihrer Gesamtheit eine von dem Werkzeug 1 relativ zum Werkstück 2 abzufahrende Bahn. Die Bahn ist in der Regel durch ein Teileprogramm 6 bestimmt, das der Steuereinrichtung 4 vorgegeben wird. Die Steuereinrichtung 4 arbeitet das Teileprogramm 6 unter Steuerung durch ein Systemprogramm 7 ab. Somit ergibt sich für eine Abfolge von Bearbeitungszeitpunkten ti eine zugehörige Abfolge von Vektoren Vi, wobei i = 1, 2, 3, ... N ein Index ist. Jeder Vektor Vi umfasst zumindest die für den jeweiligen Bearbeitungszeitpunkt ti gültige Lage x, y, z. Der jeweilige Vektor Vi kann als Lage xi, yi, zi die Lageistwerte x, y, z bzw. die Istpositionen x, y, z enthalten. Alternativ handelt es sich um die korrespondierenden Lagesollwerte x*, y*, z* bzw. Sollpositionen x*, y*, z*.

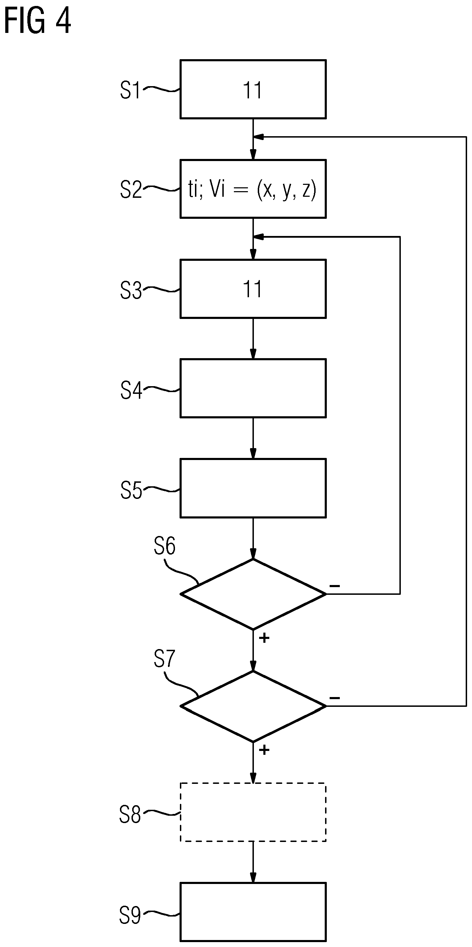

Die Vektoren Vi werden an eine der Steuereinrichtung 4 zugeordnete Recheneinrichtung 8 übermittelt. Die Recheneinrichtung 8 kann beispielsweise als üblicher Industrie-PC ausgebildet sein. In der Recheneinrichtung 8 wird die Abfolge der Vektoren Vi zumindest verarbeitet, oftmals auch gespeichert. Die Recheneinrichtung 8 ist mit einem Computerprogramm 9 programmiert. Das Computerprogramm 9 umfasst Maschinencode 10, der von der Recheneinrichtung 8 unmittelbar abarbeitbar ist. Die Abarbeitung des Maschinencodes 10 durch die Recheneinrichtung 8 bewirkt, dass die Recheneinrichtung 8 ein Ermittlungsverfahren ausführt, das nachstehend in Verbindung mit FIG 4 näher erläutert wird.

Die Recheneinrichtung 8 ist in FIG 1 als von der Steuereinrichtung 4 verschiedene Einrichtung dargestellt. Alternativ ist es jedoch möglich, dass die Recheneinrichtung 8 mit der Steuereinrichtung 4 identisch ist. Dies ist in FIG 1 durch eine gestrichelte Umrahmung angedeutet, in der sich sowohl die Steuereinrichtung 4 als auch die Recheneinrichtung 8 befinden. In diesem Fall wäre auch das Systemprogramm 7 der Steuereinrichtung 4 mit dem Computerprogramm 9 der Recheneinrichtung 8 identisch. Dies ist in FIG 1 durch eine gestrichelte Umrahmung angedeutet, in der sich sowohl das Systemprogramm 7 als auch das Computerprogramm 9 befinden.

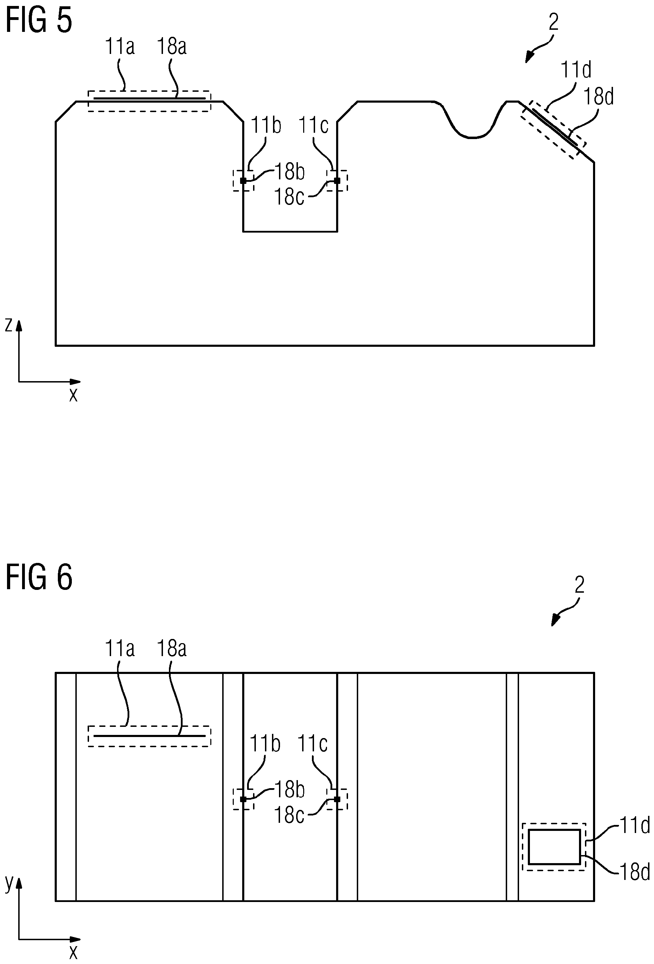

Gemäß FIG 4 werden der Recheneinrichtung 8 in einem Schritt S1 virtuelle Bereiche 11 (siehe FIG 5 und 6) bekannt. Die virtuellen Bereiche 11 können der Recheneinrichtung 8 beispielsweise direkt oder indirekt von einer Bedienperson 12 vorgegeben werden. Dies wird später noch näher erläutert werden. Die virtuellen Bereiche 11 sind in den FIG 5 und 6 durch einen kleinen Buchstaben (a bis d) ergänzt, um sie nachstehend bei Bedarf sprachlich voneinander unterscheiden zu können.

In einem Schritt S2 nimmt die Recheneinrichtung 8 einen Vektor Vi und damit zumindest die Lage x, y, z für den zugehörigen Bearbeitungszeitpunkt ti entgegen. Die Lage x, y, z wird von der Steuereinrichtung 4 in der Regel mit einer hohen Genauigkeit erfasst und kann demzufolge der Recheneinrichtung 8 auch mit einer entsprechenden Genauigkeit zur Verfügung gestellt werden. Die Genauigkeit kann im Bereich von 1 µm liegen. Auch noch höhere Genauigkeiten sind möglich.

In einem Schritt S3 selektiert die Recheneinrichtung 8 einen virtuellen Bereich 11. In einem Schritt S4 ermittelt die Recheneinrichtung 8 für den entsprechenden Bearbeitungszeitpunkt ti, ob und gegebenenfalls in welchem Umfang das reale Werkzeug 1 zum jeweiligen Bearbeitungszeitpunkt ti auf ein mit dem selektierten virtuellen Bereich 11 korrespondierendes Gebiet des realen Werkstücks 2 einwirkt. In einem Schritt S5 aktualisiert die Recheneinrichtung 8 den selektierten virtuellen Bereich 11 anhand des Umfangs, in dem zum jeweiligen Bearbeitungszeitpunkt ti eine Einwirkung erfolgt. Der verbleibende virtuelle Bereich 11 korrespondiert somit mit dem verbleibenden Teil des Gebiets des realen Werkstücks 2 zum jeweiligen Bearbeitungszeitpunkt ti. Die Aktualisierung des selektierten virtuellen Bereichs 11 führt die Recheneinrichtung 8 mit einer ersten Ortsauflösung aus. Mögliche Ausgestaltungen der Aktualisierung und der ersten Ortsauflösung werten später noch näher erläutert werden.

Die Vorgehensweise der Schritte S3 bis S5 ist Fachleuten vom Ansatz her allgemein bekannt. Insbesondere arbeiten übliche Materialabtragsmodelle, die beispielsweise im Rahmen einer Kollisionsprüfung verwendet werden, auf diese Weise. Bei üblichen Materialabtragsmodellen erfolgt die Ermittlung jedoch einheitlich für ein mit dem gesamten Werkstück 2 korrespondierendes Gesamtvolumen. Im Rahmen der vorliegenden Erfindung dient die Vorgehensweise jedoch nicht der Kollisionsprüfung, sondern nur der Ermittlung der Kontur des Werkstücks 2, und dies auch nicht über das gesamte Werkstück 2, sondern nur für ganz bestimmte Stellen, nämlich die virtuellen Bereiche 11. Dort aber erfolgt die Ermittlung mit einer Ortsauflösung, die erheblich feiner ist als die bei Materialabtragsmodellen üblichen Ortsauflösungen. Auch dies wird später noch näher erläutert werden.

In einem Schritt S6 prüft die Recheneinrichtung 8, ob sie die Schritte S3 bis S5 bereits für alle virtuellen Bereiche 11 durchgeführt hat. Wenn dies nicht der Fall ist, geht die Recheneinrichtung 8 zum Schritt S3 zurück. Bei der erneuten Ausführung des Schrittes S3 selektiert die Recheneinrichtung 8 jedoch einen anderen virtuellen Bereich 11, für den sie für den betrachteten Bearbeitungszeitpunkt ti die Schritte S3 bis S5 noch nicht ausgeführt hat.

Anderenfalls geht die Recheneinrichtung 8 zu einem Schritt S7 über. Im Schritt S7 prüft die Recheneinrichtung 8, ob sie die Lage x, y, z bereits für alle Bearbeitungszeitpunkte ti entgegengenommen hat. Wenn dies nicht der Fall ist, geht die Recheneinrichtung 8 zum Schritt S2 zurück, in dem sie die Lage x, y, z für den nächsten Bearbeitungszeitpunkt ti entgegennimmt.

Anderenfalls geht die Recheneinrichtung 8 zu einem Schritt S8 über. Im Schritt S8 führt die Recheneinrichtung 8 eine Nachberechnung der Teilvolumina 11 durch. Der Schritt S8 ist nur optional und daher in FIG 4 nur gestrichelt dargestellt.

Mit dem Beenden der Ausführung der aus den Schritten S2 bis S7 bestehenden Schleife bzw. mit der Ausführung des Schrittes S8 hat die Recheneinrichtung 8 somit virtuell die Endkontur des realen Werkstücks 2 ermittelt, jedoch nur in den virtuellen Bereichen 11, also für die korrespondierenden Gebiete des realen Werkstücks 2. Hingegen ist keine entsprechende Ermittlung für die übrigen Gebiete des realen Werkstücks 2 erfolgt.

Schließlich führt die Recheneinrichtung 8 einen Schritt S9 aus. Im Schritt S9 erfolgt eine Auswertung der ermittelten virtuellen Bereiche 11, also derjenigen virtuellen Bereiche 11, die nach der letztmaligen Aktualisierung im Schritt S5 verblieben sind. Insbesondere kann im Schritt S9 eine virtuelle Vermessung des Werkstücks 2 erfolgen. Beispielsweise kann die Recheneinrichtung 8 eine Geradheit der Endkontur im virtuellen Bereich 11a, einen Abstand der Endkontur in den virtuellen Bereichen 11b und 11c voneinander und eine Planheit und/oder eine Orientierung der Endkontur im virtuellen Bereich 11d ermitteln. Auch andere Auswertungen sind möglich. Beispielsweise kann die Recheneinrichtung 8 bei Vorgabe mehrerer Punkte den Ort und gegebenenfalls die Skalierung und/ oder die Orientierung einer vorbestimmten geometrischen Figur (beispielsweise eines Kreises) optimieren, so dass sich ein möglichst geringer Fehler zur Gesamtheit der Punkte ergibt (best fit), und sodann als Auswertungsergebnis die von der Recheneinrichtung 8 bestimmten Parameter der geometrischen Figur verwerten.

Es ist möglich, dass die Recheneinrichtung 8 zunächst nur die Lagen x, y, z für die Bearbeitungszeitpunkte ti entgegennimmt, der Schritt S2 also eine eigene Schleife im programmtechnischen Sinne darstellt. In diesem Fall werden die weiteren Schritte S3 bis S9 erst nachträglich ausgeführt. Vorzugsweise ist die iterative Ausführung der Schritte S3 bis S6 (iterativ, weil die Schritte S3 bis S5 für jeden virtuellen Bereich 11 ausgeführt werden müssen) zusammen mit dem Schritt S2 in eine Schleife eingebunden. In diesem Fall ist es möglich, dass die Recheneinrichtung 8 das Ermittlungsverfahren online und in Echtzeit parallel zur Bearbeitung des realen Werkstücks 2 durch die Werkzeugmaschine ausführt.

Im Rahmen üblicher Materialabtragsmodelle kann das Werkstück 2 auf verschiedene Art und Weise modelliert werden. Beispielsweise kann das Werkstück 2 durch einen Volumendatensatz modelliert werden, wobei jedem Volumenelement (Voxel) des Volumendatensatzes drei Raumkoordinaten zugeordnet sind. Auch kann eine Modellierung durch Triangulation der Oberfläche des Werkstücks 2 erfolgen. In vielen Fällen wird das Werkstück 2 jedoch durch ein Dexelmodell modelliert. Diese Modellierung ist in der Regel einfacher und mit geringerem Rechenaufwand zu implementieren.

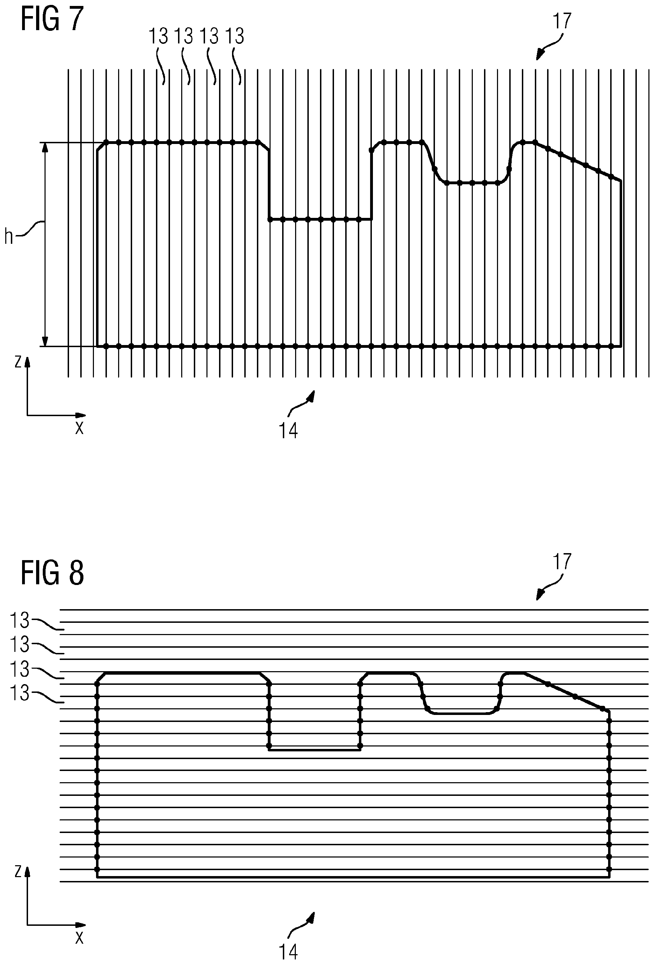

Bei einem Dexelmodell wird das Werkstück 2 virtuell in ein zweidimensionales Raster von Säulen 13 unterteilt, wobei jeder Säule 13 individuell mindestens ein jeweiliger Höhenwert zugeordnet ist, beispielsweise ihre jeweilige Höhe h. In der Darstellung von FIG 7 erstreckt sich das Raster beispielsweise in der xy-Ebene, während sich die jeweilige Höhenrichtung in z-Richtung erstreckt. Diese Darstellung weist insbesondere oftmals den Vorteil auf, dass pro Säule 13 nur die Grundlinie (in FIG 7 unten dargestellt) und der obere Abschluss spezifiziert werden müssen, um die jeweilige Säule 13 vollständig zu beschreiben.

In z-Richtung ist bei dem Dexelmodell von FIG 7 die Ortsauflösung nur durch die reale Positioniergenauigkeit einerseits und die Genauigkeit, mit der die Höhe h von der Recheneinrichtung 8 ermittelt und gespeichert wird, beschränkt. Die Genauigkeit liegt oftmals bei 1 µm und genauer. In x-Richtung und y-Richtung ist die Ortsauflösung durch das Rastermaß des Dexelmodells bestimmt. Das Rastermaß liegt bei üblichen Materialabtragsmodellen in der Regel bei mindestens 0,1 x 0,1 mm. Oftmals liegt es sogar bei erheblich größeren Werten wie beispielsweise mindestens 0,2 x 0,2 mm, mindestens 0,5 x 0,5 mm oder mindestens 1,0 x 1,0 mm. Beispielsweise bei einem Rastermaß von 1,0 x 1,0 mm und einer Erstreckung des Werkstücks 2 über nur 100 mm x 100 mm bedeutet dies 10.000 Säulen 13, für die jeweils die Höhe h ermittelt und laufend aktualisiert werden muss. Für eine Erkennung grober Fertigungsfehler und für eine Verwendung im Rahmen einer Kollisionsprüfung sind derartige Genauigkeiten ausreichend.

FIG 8 zeigt ein ähnliches Dexelmodell wie FIG 7. Im Gegensatz zu FIG 7 erstreckt sich das Raster jedoch in der yz-Ebene, während sich die jeweilige Höhe h in x-Richtung erstreckt. In diesem Fall kann die y-Koordinate mit hoher Genauigkeit (beispielsweise 1 µm) bestimmt werden, jedoch nur in einem erheblich gröberen Raster in x- und z-Richtung. FIG 8 zeigt weiterhin, dass die Säulen 13 mehrfach unterteilt sein können, den Säulen 13 also jeweils mehrere Höhenwerte zugeordnet sein können. FIG 8 zeigt somit insbesondere, dass die Komplexität des gewählten Dexelmodells im Stand der Technik im Laufe der Bearbeitung ansteigen kann.

Nicht dargestellt ist der Fall, dass sich das Raster in der xz-Ebene, während sich die jeweilige Höhe h in y-Richtung erstreckt. Auch diese Möglichkeit ist jedoch gegeben.

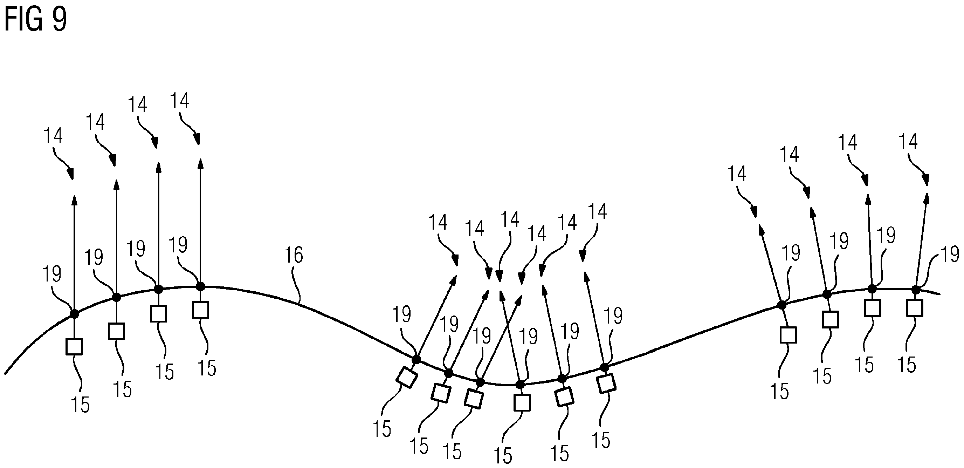

Im Rahmen der vorliegenden Erfindung können ebenfalls derartige Dexelmodelle angewendet werden. Hierbei werden die virtuellen Bereiche 11 mittels eines jeweiligen Dexelmodells modelliert, meist mittels jeweils eines einzigen Dexelmodells. Diese Art der Modellierung wird nachstehend in Verbindung mit FIG 9 näher erläutert.

Gemäß FIG 9 wird ein jeweiliger virtueller Bereich 11 durch eine Anzahl von Dexeln 14 modelliert. Minimal ist ein einziges Dexel 14 vorhanden. Es können aber auch mehrere Dexel 14 vorhanden sein, die in einem eindimensionalen Raster oder in einem zweidimensionalen Raster angeordnet sind.

Jedes Dexel 14 geht von einer jeweiligen Stützstelle 15 aus und erstreckt sich, ausgehend von der jeweiligen Stützstelle 15, in einer Höhenrichtung. Die Höhenrichtung ist in FIG 9 durch einen von der jeweiligen Stützstelle 15 ausgehenden Pfeil angedeutet. Es ist möglich, dass die Höhenrichtung einheitlich für das jeweilige Dexelmodell ist, also für alle Dexel 14 des jeweiligen Dexelmodells, mittels dessen der jeweilige virtuelle Bereich 11 modelliert wird. Dies ist in FIG 9 rein beispielhaft links angedeutet. Alternativ ist es möglich, dass die jeweilige Höhenrichtung individuell für das jeweilige Dexel 14 bestimmt ist. Dies ist in FIG 9 rein beispielhaft rechts angedeutet. Auch ein Mittelweg, bei dem innerhalb des jeweiligen Dexelmodells die Höhenrichtung jeweils einheitlich für eine Gruppe von Dexeln 14 bestimmt ist, ist möglich. Dies ist in FIG 9 in der Mitte dargestellt. Auf Möglichkeiten zur Bestimmung der Höhenrichtung wird später noch eingegangen werden.

Die Recheneinrichtung 8 ordnet den Dexeln 14 zu den Bearbeitungszeitpunkt gehen ti vorzugsweise jeweils nur einen einzelnen Höhenwert h zu, also weder keinen Höhenwert noch mehr als einen Höhenwert. Dies ist in FIG 9 nur für zwei Dexel 14 dargestellt, um FIG 9 nicht zu überfrachten. Die Zuordnung nur eines einzigen Höhenwertes h ist möglich, weil die Dexel 14 derart angeordnet sein können, dass ihre Stützstellen 15 sich innerhalb einer Soll-Endkontur 16 befinden, in die das Werkstück 2 durch die Bearbeitung mittels des Werkzeugs 1 überführt werden soll, und die Soll-Endkontur 16 durchstoßen, so dass sie im Endzustand, wenn also die Bearbeitung des Werkstücks 2 durch das Werkzeug 1 beendet ist, in der Höhenrichtung nur eine einzige Höhe h aufweisen. Insbesondere kann sich jedes Dexel 14 zunächst, ausgehend von der jeweiligen Stützstelle 15, beliebig weit in die positive Richtung (angedeutet in FIG 9 durch die Pfeile der Höhenrichtung) erstrecken und jedes Mal, wenn das Werkzeug 1 auf das Gebiet des realen Werkstücks 2 einwirkt, das mit dem so definierten Dexel 14 korrespondiert, das jeweilige Dexel 14 bis zu demjenigen Punkt kürzen, an dem das jeweilige Dexel 14 ein mit dem realen Werkzeug 1 korrespondierendes "virtuelles Werkzeug" erstmals berührt. Dadurch wird erreicht, dass am Ende der Bearbeitung - unabhängig von Zwischenzuständen - die Höhe h den korrespondierenden Ort auf der realen Endkontur angibt, bis zu dem das Material des Werkstücks 2 durch die Bearbeitung mit dem Werkzeug 1 abgetragen wurde. Durch diese Vorgehensweise ist insbesondere der Rechenaufwand definiert und einheitlich. Gleiches gilt für den erforderlichen Speicherbedarf.

Wenn das jeweilige Dexelmodell nur ein einziges Dexel 14 aufweist, ist eine Erstreckung dieses einen Dexels 14 quer zur Höhenrichtung quasi 0. Wenn das Dexelmodell mehrere Dexel 14 aufweist, bilden die Dexel 14 in einer oder in zwei Dimensionen ein enges Raster. Im Unterschied zur üblichen Vorgehensweise des Standes der Technik ist das Rastermaß sehr fein. Beispielsweise kann im Falle eines zweidimensionalen Rasters das Rastermaß bei 100 x 100 µm liegen. Es kann auch darunter liegen. Insbesondere sind Rastermaße von beispielsweise höchstens 50 x 50 µm, höchstens 20 x 20 µm oder weniger möglich, beispielsweise von höchstens 10 x 10 µm. In der Höhenrichtung bleibt die Ortsauflösung gegenüber der im Rahmen von herkömmlichen Materialabtragsmodellen üblichen Vorgehensweise unverändert. Analoge Ausführungen gelten für ein eindimensionales Raster.

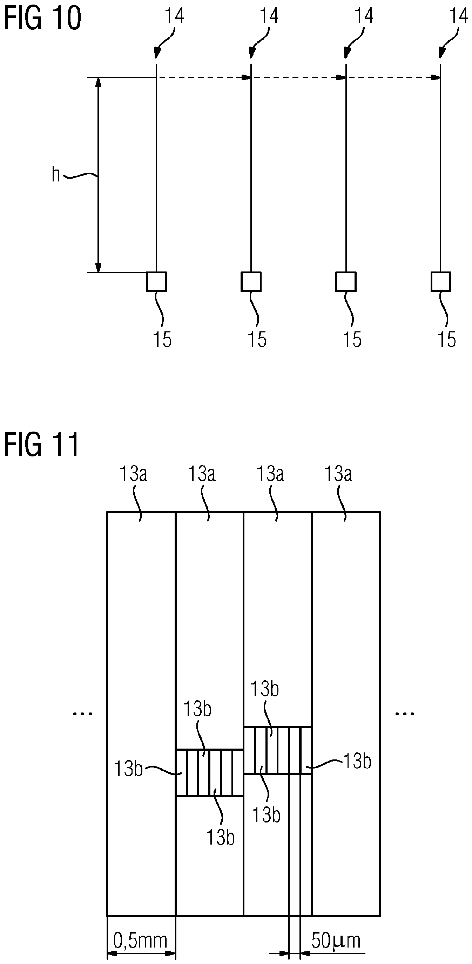

Es ist weiterhin möglich, weitere Maßnahmen zur Optimierung der erforderlichen Rechenzeit zu ergreifen. Beispielsweise ist es möglich, anstelle des "echten" Schnittpunkts des virtuellen Werkzeugs mit dem jeweiligen Dexel 14 den TCP (TCP = tool center point) des virtuellen Werkzeugs zu verwenden, solange ein Abstand des TCP von der Stützstelle 15 des jeweiligen Dexels 14 kleiner als eine vorbestimmte Größe ist, beispielsweise kleiner als der größere Wert von Länge und Breite des Werkzeugs 1. Auch ist es möglich, mehrere Dexel 14 zu einer Gruppe von Dexeln 14 zusammenzufassen und diesen Dexeln 14 einheitlich einen Höhenwert h zuzuordnen, solange ein Abstand des TCP von der Stützstelle des jeweiligen Dexels 14 kleiner als eine vorbestimmte Größe ist, beispielsweise kleiner als die Länge und kleiner als die Breite des Werkzeugs 1. Dies ist schematisch in FIG 10 angedeutet.

Soweit bisher erläutert, ermittelt die Recheneinrichtung 8 außerhalb der virtuellen Bereiche 11 nicht, ob und gegebenenfalls in welchem Umfang das reale Werkzeug 1 auf das reale Werkstück 2 einwirkt. Es ist jedoch möglich, dass derartige Ermittlungen vorgenommen werden.

Beispielsweise ist es möglich, dass die Recheneinrichtung 8 parallel zu dem erfindungsgemäßen Ermittlungsverfahren ein übliches Materialabtragsmodell mitrechnet, mittels dessen sie - beispielsweise für eine Kollisionsvermeidung - für einen mit dem gesamten Werkstück 2 korrespondierenden virtuellen Zusatzbereich 17 (siehe FIG 7 und 8) ermittelt, ob und gegebenenfalls in welchem Umfang das reale Werkzeug 1 auf das reale Werkstück 2 einwirkt, und den virtuellen Zusatzbereich 17 entsprechend aktualisiert. Die Vorgehensweise ist Fachleuten als solche bekannt. Der entscheidende Unterschied besteht in diesem Fall jedoch darin, dass im Rahmen dieses Materialabtragsmodells bezüglich des Zusatzvolumens 17 nicht mit derselben feinen Ortsauflösung gerechnet wird wie im Rahmen des erfindungsgemäßen Ermittlungsverfahrens, sondern mit einer erheblich gröberen Ortsauflösung. Beispielsweise kann die Recheneinrichtung 8 den virtuellen Zusatzbereich 17 mittels eines oder mehrerer Dexelmodelle modellieren, beispielsweise so, wie dies obenstehend in Verbindung mit den FIG 7 und 8 skizziert wurde.

Das Ansetzen und Aktualisieren des virtuellen Zusatzbereichs 17 ist auch möglich, wenn der virtuelle Zusatzbereich 17 und/oder die virtuellen Bereiche 11 nicht mittels (mindestens) eines Dexelmodells modelliert werden, sondern auf andere Weise. Unabhängig von der Art der Modellierung gilt jedoch, dass die Recheneinrichtung 8 den virtuellen Zusatzbereich 17 mit einer Ortsauflösung aktualisiert, die gröber als die Ortsauflösung ist, welche für die virtuellen Bereiche 11 verwendet wird. Dies gilt bezüglich mindestens einer von drei zueinander orthogonalen Raumrichtungen. In den verbleibenden Raumrichtungen ist die Ortsauflösung für den virtuellen Zusatzbereich 17 maximal so fein wie die Ortsauflösung für die virtuellen Bereiche 11.

In den Raumrichtungen, in denen die Ortsauflösung für den virtuellen Zusatzbereich 17 gröber als die Ortsauflösung für die virtuellen Bereiche 11 ist, ist die Ortsauflösung für die virtuellen Bereiche 11 vorzugsweise mindestens fünfmal so fein wie die Ortsauflösung für den virtuellen Zusatzbereich 17. Vorzugsweise ist das Verhältnis sogar mindestens zehnmal so groß. Dies ist beispielsweise der Fall, wenn entsprechend der Darstellung in FIG 11 im virtuellen Zusatzbereich 17, soweit er außerhalb von virtuellen Bereichen 11 liegt, Säulen 13a in einem Raster von 0,5 x 0,5 mm angeordnet sind und innerhalb der virtuellen Bereiche 11 Säulen 13b ein feineres Raster von 50 x 50 µm bilden. Es sind aber auch noch größere Verhältnisse möglich, beispielsweise ein Verhältnis von mindestens 30, mindestens 50, mindestens 80 oder mindestens 100.

Trotz der Verwendung der feinen Ortsauflösung für die virtuellen Bereiche 11 bleibt auch die Echtzeitfähigkeit des erfindungsgemäßen Ermittlungsverfahrens erhalten. Dies steht im Gegensatz zu einer Verwendung einer feinen Ortsauflösung für das gesamte Werkstück 2. Würde bei Verwendung einer derart feinen Ortsauflösung von beispielsweise 50 x 50 µm (das heißt mit einem entsprechenden Rastermaß) das gesamte Werkstück 2 mit einem einzigen Dexelmodell modelliert, müssten bei einer Erstreckung des Werkstücks 2 über nur 100 mm x 100 mm bereits 2000 x 2000 = 4.000.000 Säulen 13 angesetzt werden. Für eine vollständige Modellierung in allen drei Raumrichtungen, also mit drei Dexelmodellen, wären in diesem Fall 3 x 4.000.000 Säulen 13 = 12.000.000 Säulen 13 erforderlich. Weiterhin muss - unabhängig von der Anzahl an verwendeten Dexelmodellen - für jede der Säulen 13 oftmals eine Vielzahl von Schnittpunkten berechnet und gespeichert werden. Dies würde, sofern eine Ermittlung in Echtzeit gefordert würde, die Leistungsfähigkeit üblicher Recheneinrichtungen 8 bei weitem übersteigen.

Es ist möglich, dass die virtuellen Bereiche 11 der Recheneinrichtung 8 fest vorgegeben sind. In der Regel erfolgt jedoch eine direkte oder indirekte Vorgabe durch die Bedienperson 12. Eine Möglichkeit zur Vorgabe wird nachstehend näher erläutert.

Zunächst gibt die Bedienperson 12 eine Anzahl von Sonderzonen 18 vor (siehe FIG 5, 6 und 9). Die Sonderzonen 18 sind in den FIG 5 und 6 analog zu den Teilvolumina 11 durch einen kleinen Buchstaben (a bis d) ergänzt, um sie nachstehend bei Bedarf sprachlich voneinander unterscheiden zu können. In FIG 9 ist nur eine einzige Sonderzone 18 eingezeichnet. Sie ist durch zwei kurze Linien angedeutet, welche die Soll-Endkontur 16 orthogonal schneiden.

Die Sonderzonen 18 können nulldimensional sein. Beispielsweise kann die Bedienperson 12 einen Punkt oder eine Mehrzahl von Punkten vorgeben. Alternativ kann die Bedienperson 12 eindimensionale Sonderzonen 18 vorgeben. Beispielsweise kann die Bedienperson 12 eine gerade Linie vorgeben. Auch kann die Bedienperson 12 einen Polygonzug oder eine in definierter Weise gekrümmte Kurve vorgeben (beispielsweise einen Kreis oder einen Teil eines Kreises oder eine Parabel). Alternativ kann die Bedienperson 12 zweidimensionale Sonderzonen 18 vorgeben. Beispielsweise kann die Bedienperson 12 eine ebene Fläche vorgeben. Auch kann die Bedienperson 12 eine in definierter Weise gekrümmte Fläche vorgeben, beispielsweise einen Teil einer Kugel. Auch Mischformen sind möglich, dass also Sonderzonen 18 verschiedener Dimensionalität vorgegeben werden. In dem Beispiel der FIG 5 und 6 ist die Sonderzone 18a eindimensional, sind die Sonderzonen 18b und 18c nulldimensional und ist die Sonderzone 18d zweidimensional.

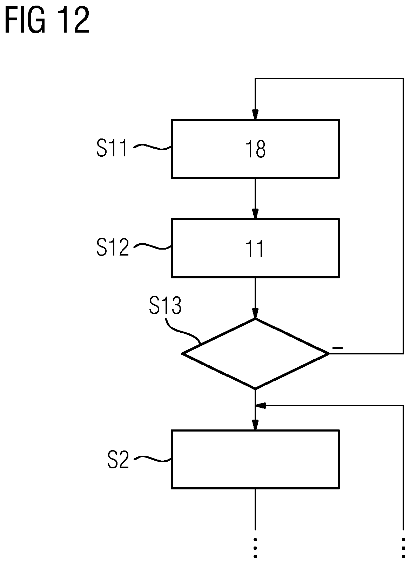

Die Sonderzonen 18 werden von der Bedienperson 12 in der Regel sequenziell nacheinander vorgegeben. Die Recheneinrichtung 8 nimmt die von der Bedienperson 12 jeweils vorgegebene Sonderzone 18 gemäß FIG 12 in einem Schritt S11 entgegen. In einem Schritt S12 ermittelt die Recheneinrichtung 8 anhand der vorgegebenen Sonderzone 18 den zugehörigen virtuellen Bereich 11. Beispielsweise kann die vorgegebene Sonderzone 18 Bestandteil der Soll-Endkontur 16 sein. In diesem Fall kann die Recheneinrichtung 8 im Schritt S12 beispielsweise Basisstellen 19 der Sonderzone 18 ermitteln. Im Falle einer nulldimensionalen Sonderzone 18 wird nur eine einzige Basisstelle 19 definiert, die mit der Sonderzone 18 identisch ist. Die Bestimmung der Basisstelle 19 ist in diesem Fall entartet. Im Falle einer eindimensionalen Sonderzone 18 können die Basisstellen 19 beispielsweise in einem sehr feinen Raster von 10 µm aneinandergereiht sein. Im Falle einer zweidimensionalen Sonderzone 18 können die Basisstellen 19 beispielsweise ein sehr feines Raster von 10 x 10 µm bilden.

Für jede Basisstelle 19 ermittelt die Recheneinrichtung 8 die Normalenrichtung, d.h. diejenige Richtung, die an der jeweiligen Basisstelle 19 orthogonal auf der Soll-Endkontur 16 steht. Die ermittelte Richtung zeigt von der jeweiligen Basisstelle 19 aus in diejenige Richtung, in der sich kein Material befindet. Sodann kann die Recheneinrichtung 8 einen Punkt bestimmen, der ausgehend von der jeweiligen Basisstelle 19 um eine vorbestimmte Strecke - beispielsweise eine Strecke im einstelligen Millimeterbereich - entgegen dieser Richtung von der jeweiligen Basisstelle 19 entfernt ist. Dieser Punkt entspricht einer Stützstelle 15 eines Dexels 14. Die Höhenrichtung dieses Dexels 14 ist in diesem Fall mit der soeben ermittelten Normalenrichtung identisch.

In einem Schritt S13 prüft die Recheneinrichtung 8, ob die Vorgabe der Sonderzonen 18 beendet ist. Wenn dies nicht der Fall ist, geht die Recheneinrichtung 8 zum Schritt S11 zurück, in dem sie die Vorgabe der nächsten Sonderzone 18 entgegennimmt. Anderenfalls geht die Recheneinrichtung 8 zum Schritt S2 über.

Es ist auch möglich, die obenstehend erläuterte Vorgehensweise nicht für jede einzelne Basisstelle 19 zu ergreifen, sondern jeweils Gruppen von Basisstellen 19 zu bilden, aus der jeweiligen Gruppe eine Basisstelle 19 herauszugreifen, für diese Basisstelle 19 die Höhenrichtung zu ermitteln und die ermittelte Höhenrichtung für die anderen Basisstellen 19 der jeweiligen Gruppe zu übernehmen. Auch dieser Fall ist in FIG 9 dargestellt. Die Ermittlung der jeweiligen Stützstelle 15 kann in diesem Fall alternativ vor oder nach Ermittlung der einheitlichen Höhenrichtung erfolgen.

Die vorliegende Erfindung kann auf verschiedene Art und Weise ausgestaltet werden.

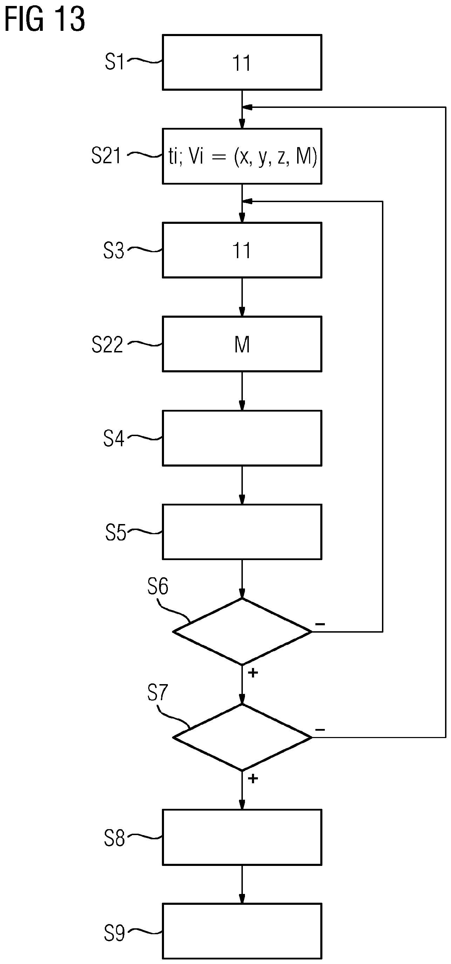

Eine mögliche Ausgestaltung zeigt FIG 13. FIG 13 geht aus von FIG 4.

Bei FIG 13 ist zunächst der Schritt S2 durch einen Schritt S21 ersetzt. Im Schritt S21 nimmt die Recheneinrichtung 8 von der Steuereinrichtung 4 für die Bearbeitungszeitpunkte ti zusätzlich zur jeweiligen Lage x, y, z Werte entgegen, die für Lagefehler des realen Werkzeugs 1 relativ zum realen Werkstück 2 charakteristisch sind. Beispielsweise kann die Recheneinrichtung 8 zu diesem Zweck Antriebsmomente M oder hiermit korrespondierende Werte der lagegeregelten Achsen 3 entgegennehmen. Die Antriebsmomente M können insbesondere Bestandteil des jeweiligen Vektors Vi sein. Die Antriebsmomente M können von der Steuereinrichtung 4 ebenfalls mit hoher Genauigkeit erfasst und dadurch der Recheneinrichtung 8 mit entsprechender Genauigkeit zur Verfügung gestellt werden. Auch ist es möglich, Positionswerte eines direkten Meßsystems und eines indirekten Meßsystems miteinander in Bezug zu setzen und daraus den Lagefehler des realen Werkzeugs 1 relativ zum realen Werkstück 2 zu ermitteln. Ein direktes Messsystem ist beispielsweise ein Lagesensor, der direkt die Position des Werkzeugs 1 relativ zum Werkstück 2 erfasst. Ein indirektes Messsystem sind beispielsweise Drehgeber, mittels derer die Drehstellungen der Antriebe der lagegeregelten Achsen 3 erfasst werden.

Die erfassten und an die Recheneinrichtung 8 übermittelten Werte sind charakteristisch für ein Ausmaß, um welches das reale Werkzeug 1 aufgrund von Bearbeitungskräften gegenüber dem realen Werkstück 2 abgedrängt wird.

Weiterhin ist in FIG 13 dem Schritt S4 ein Schritt S22 vorgeordnet. Im Schritt S22 ermittelt die Recheneinrichtung 8 den jeweiligen Lagefehler des realen Werkzeugs 1 relativ zum realen Werkstück 2. Insbesondere kann die Recheneinrichtung 8 im Rahmen des Schrittes S22 ihr bekannte Steifigkeiten der lagegeregelten Achsen 3 berücksichtigen. Im nachfolgenden Schritt S4 ermittelt die Recheneinrichtung 8 - analog zu Vorgehensweise gemäß FIG 4 - für den entsprechenden Bearbeitungszeitpunkt ti, ob und gegebenenfalls in welchem Umfang das reale Werkzeug 1 zum jeweiligen Bearbeitungszeitpunkt ti auf ein mit dem selektierten virtuellen Bereich 11 korrespondierendes Gebiet des realen Werkstücks 2 einwirkt. Aufgrund des Schrittes S22 berücksichtigt die Recheneinrichtung 8 jedoch bei dieser Ermittlung den im Schritt S22 ermittelten Lagefehler.

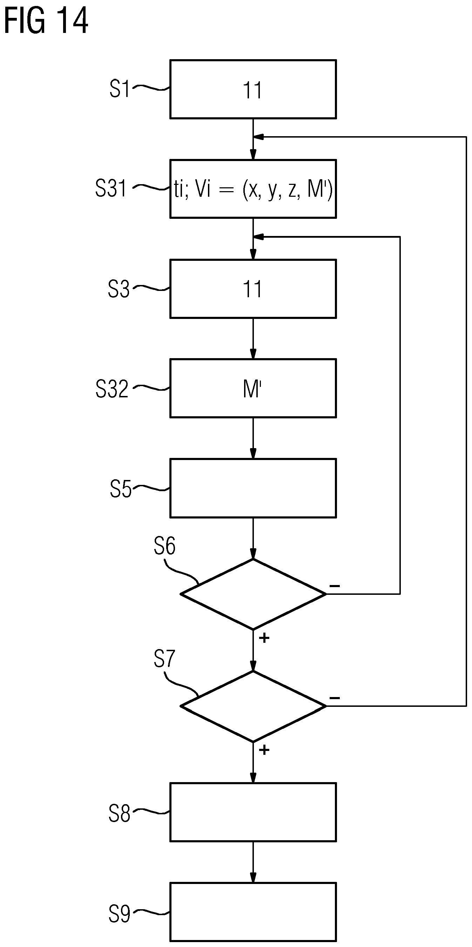

Eine weitere mögliche Ausgestaltung zeigt FIG 14. FIG 14 geht ebenfalls aus von FIG 4. Diese Ausgestaltung kann nach Bedarf mit der Ausgestaltung von FIG 13 kombiniert werden oder unabhängig von ihr realisiert werden.

Bei FIG 14 ist der Schritt S2 durch einen Schritt S31 ersetzt. Im Schritt S31 nimmt die Recheneinrichtung 8 von der Steuereinrichtung 4 für die Bearbeitungszeitpunkte ti zusätzlich zur jeweiligen Position x, y, z ein Antriebsmoment M' eines Spindelantriebs 5 entgegen, also im Ergebnis das Antriebsmoment M' der drehzahlgeregelten Achse 5. Das Antriebsmoment M' kann insbesondere Bestandteil des jeweiligen Vektors Vi sein. Das Antriebsmoment M' ist charakteristisch für die Kraft, die benötigt wird, um im Falle der Einwirkung auf ein einem virtuellen Bereich 11 zugeordnetes Gebiet das jeweilige Schnittvolumen abzutragen. Wie zuvor kann beispielsweise der zugehörige Motorstrom erfasst werden und daraus das Antriebsmoment M' ermittelt werden. Auch das Antriebsmoment M' kann von der Steuereinrichtung 4 mit hoher Genauigkeit erfasst und dadurch der Recheneinrichtung 8 mit entsprechender Genauigkeit zur Verfügung gestellt werden.

Weiterhin ist in FIG 14 der Schritt S4 durch einen Schritt S32 ersetzt. Im Schritt S32 ordnet die Recheneinrichtung 8 - zusätzlich zur Ermittlung des Umfangs, in dem das reale Werkzeug 1 zum jeweiligen Bearbeitungszeitpunkt ti auf ein mit dem selektierten virtuellen Bereich 11 korrespondierendes Gebiet des realen Werkstücks 2 einwirkt, den Dexeln 14 des jeweiligen virtuellen Bereichs 11, in dem das reale Werkzeug 1 zum jeweiligen Bearbeitungszeitpunkt ti auf das entsprechende Gebiet des realen Werkstücks 2 einwirkt, das Antriebsmoment M' des Spindelantriebs 5 zu.

Weiterhin ist in diesem Fall der Schritt S8 vorhanden. Im Schritt S8 ermittelt die Recheneinrichtung 8 für diese Bereiche eine Aussage über die Oberflächenqualität der Endkontur des Werkstücks 2 an der jeweiligen Stelle. Die entsprechende Vorgehensweise ist detailliert in der älteren europäischen Patentanmeldung mit dem amtlichen Aktenzeichen 17 19 0317.2 der Anmelderin, eingereicht beim europäischen Patentamt am 11.09.2017, erläutert.

Zusammengefasst betrifft die vorliegende Erfindung somit folgenden Sachverhalt:

Ein Werkstück 2 wird mittels einer materialabtragenden Bearbeitung durch ein Werkzeug 1 einer Werkzeugmaschine zum Ende der Bearbeitung hin in eine Endkontur überführt. Zum Bearbeiten des Werkstücks 2 wird das Werkzeug 1 gesteuert von einer Steuereinrichtung 4 der Werkzeugmaschine relativ zum Werkstück 2 entlang einer Bahn verfahren. Dadurch befindet sich das reale Werkzeug 1 relativ zum realen Werkstück 2 zu Bearbeitungszeitpunkten ti jeweils an einer jeweiligen Lage x, y, z. Eine Recheneinrichtung 8 nimmt die Lagen x, y, z entgegen. Sie ermittelt für die Bearbeitungszeitpunkte ti jeweils, ob und gegebenenfalls in welchem Umfang das Werkzeug 1 zum jeweiligen Bearbeitungszeitpunkt ti auf vorbestimmte Gebiete des Werkstücks 2 einwirkt. Sie aktualisiert den vorbestimmten Gebieten zugeordnete virtuelle Bereiche 11 entsprechend dem ermittelten Umfang mit einer ersten Ortsauflösung. Außerhalb der virtuellen Bereiche 11 ermittelt die Recheneinrichtung 8 entweder nicht, ob und gegebenenfalls in welchem Umfang Umfang das reale Werkzeug 1 auf das reale Werkstück 2 einwirkt, oder sie nimmt eine derartige Ermittlung zwar vor und aktualisiert einen virtuellen Zusatzbereich 17 entsprechend. In diesem Fall ist eine zweite Ortsauflösung, mit der diese Aktualisierung erfolgt, jedoch gröber als die erste Ortsauflösung.

Die vorliegende Erfindung weist viele Vorteile auf. Insbesondere kann das Ermittlungsverfahren mit relativ geringem Speicher- und Rechenaufwand realisiert werden. Zur Implementierung ist ein üblicher Industrie-PC völlig ausreichend. Eine Verwendung spezieller Rechner, die beispielsweise über starke Grafikprozessoren (GPUs) verfügen, ist nicht erforderlich. Weiterhin ist der Speicheraufwand vorab bestimmbar. Er steigt mit fortschreitender Bearbeitung des Werkstücks 2 nicht an. Es sind derart feine Ortsauflösungen möglich, dass sogar die Oberflächenrauigkeit virtuell ermittelt werden kann. Dennoch bleibt die Online-Fähigkeit erhalten. Ein nachträgliches reales Vermessen des realen Werkstücks 2 kann entfallen. Insbesondere für ein reales Vermessen erforderliche Zeitaufwand steht somit anderweitig zur Verfügung, beispielsweise für die Fertigung des nächsten Werkstücks 2. Die Produktivität der Werkzeugmaschine kann dadurch deutlich erhöht werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Ermittlungsverfahren für Bereiche einer Endkontur eines realen Werkstücks (2), in die das reale Werkstück (2) mittels einer materialabtragenden Bearbeitung durch ein reales Werkzeug (1) einer Werkzeugmaschine zum Ende der Bearbeitung hin überführt wird, wobei zum Bearbeiten des realen Werkstücks (2) das reale Werkzeug (1) gesteuert von einer Steuereinrichtung (4) der Werkzeugmaschine relativ zum realen Werkstück (2) entlang einer Bahn verfahren wird, so dass das reale Werkzeug (1) sich relativ zum realen Werkstück (2) zu Bearbeitungszeitpunkten (ti) jeweils an einer jeweiligen Lage (x, y, z) befindet,
a) wobei die Recheneinrichtung (8) die Lagen (x, y, z) entgegennimmt,
b) wobei die Recheneinrichtung (8) für die Bearbeitungszeitpunkte (ti) jeweils ermittelt, ob und gegebenenfalls in welchem Umfang das reale Werkzeug (1) zum jeweiligen Bearbeitungszeitpunkt (ti) auf vorbestimmte Gebiete des realen Werkstücks (2) einwirkt, und den Gebieten zugeordnete virtuelle Bereiche (11) entsprechend dem für das jeweilige Gebiet ermittelten Umfang aktualisiert, so dass die virtuellen Bereiche (11) mit den jeweils verbleibenden Teilen der vorbestimmten Gebiete des realen Werkstücks (2) zum jeweils betrachteten Bearbeitungszeitpunkt (ti) korrespondieren,
c) wobei die Recheneinrichtung (8) die virtuellen Bereiche (11) mit einer ersten Ortsauflösung aktualisiert,
d) wobei entweder die Recheneinrichtung (8) außerhalb der virtuellen Bereiche (11) nicht ermittelt, ob und gegebenenfalls in welchem Umfang das reale Werkzeug (1) auf das reale Werkstück (2) einwirkt,
e) oder die Recheneinrichtung (8) in einem virtuellen Zusatzbereich (17) zwar ermittelt, ob und gegebenenfalls in welchem Umfang das reale Werkzeug (1) auf ein dem virtuellen Zusatzbereich (17) zugeordnetes Gebiet des realen Werkstücks (2) einwirkt, und den virtuellen Zusatzbereich (17) entsprechend dem für das dem virtuellen Zusatzbereich (17) zugeordnete Gebiet ermittelten Umfang aktualisiert, so dass der virtuelle Zusatzbereich (17) mit dem jeweils verbleibenden Teil des Gebiets des realen Werkstücks (2) bis zum jeweils betrachteten Bearbeitungszeitpunkt (ti) korrespondiert, und
f) wobei die Recheneinrichtung (8) in dem Fall, dass sie den virtuellen Zusatzbereich (17) aktualisiert, den virtuellen Zusatzbereich (17) mit einer zweiten Ortsauflösung aktualisiert, die gröber als die erste Ortsauflösung ist.

2. Ermittlungsverfahren nach Anspruch 1,
**dadurch gekennzeichnet,**
**dass** die Recheneinrichtung (8) die virtuellen Bereiche (11) mittels eines jeweiligen Dexelmodells modelliert, dass das jeweilige Dexelmodell eine Anzahl von Dexeln (14) aufweist, die sich ausgehend von einer jeweiligen Stützstelle (15) des jeweiligen Dexels (14) in eine jeweilige Höhenrichtung erstrecken.

3. Ermittlungsverfahren nach Anspruch 2,
**dadurch gekennzeichnet,**
**dass** die jeweilige Höhenrichtung einheitlich für das jeweilige Dexelmodell oder innerhalb des jeweiligen Dexelmodells jeweils einheitlich für eine Gruppe von Dexeln (14) oder individuell für das jeweilige Dexel (14) bestimmt ist.

4. Ermittlungsverfahren nach Anspruch 2 oder 3,
**dadurch gekennzeichnet,**
**dass** die Recheneinrichtung (8) Dexeln (14) des jeweiligen Dexelmodells zu den Bearbeitungszeitpunkten (ti) jeweils nur einen einzelnen Höhenwert (h) zuordnet.

5. Ermittlungsverfahren nach einem der obigen Ansprüche,
**dadurch gekennzeichnet,**
**dass** die Recheneinrichtung (8) den virtuellen Zusatzbereich (17) mittels mindestens eines weiteren Dexelmodells modelliert, dass das mindestens eine weitere Dexelmodell eine Vielzahl von Säulen (13) aufweist, die in einer Ebene in einem regelmäßigen zweidimensionalen Raster angeordnet sind und dass den Säulen (13) individuell in einer normal zur Ebene orientierten Richtung jeweils Höhenwerte (h) zugeordnet sind.

6. Ermittlungsverfahren nach einem der obigen Ansprüche,
**dadurch gekennzeichnet,**
**dass** die Recheneinrichtung (8) nulldimensionale, eindimensionale und/oder oder zweidimensionale Sonderzonen (18) entgegennimmt, dass die Recheneinrichtung (8) die virtuellen Bereiche (11) anhand der Sonderzonen (18) ermittelt und dass die Recheneinrichtung (8) die virtuellen Bereiche (11) den Sonderzonen (18) zuordnet.

7. Ermittlungsverfahren nach Anspruch 6,
**dadurch gekennzeichnet,**
**dass** die Sonderzonen (18) Bestandteile einer Soll-Endkontur (16) sind, in welche das Werkstück (2) durch die Bearbeitung mittels des Werkzeugs (1) überführt werden soll, dass die Recheneinrichtung (8) für Basisstellen (19) der Sonderzonen (18) jeweils eine Stützstelle (15) eines Dexels (14) eines Dexelmodells ermittelt, mittels dessen der jeweilige virtuelle Bereich (11) modelliert wird, und dass die Recheneinrichtung (8) die Stützstellen (15) derart ermittelt, dass eine von einer jeweiligen Stützstelle (15) ausgehende Höhenrichtung zur jeweiligen Basisstelle (19) hin gerichtet ist und die Höhenrichtung orthogonal auf der Soll-Endkontur (16) am Ort der jeweiligen Basisstelle (19) ist.

8. Ermittlungsverfahren nach einem der obigen Ansprüche,
**dadurch gekennzeichnet,**
**dass** die Recheneinrichtung (8) das Ermittlungsverfahren online und in Echtzeit parallel zur Bearbeitung des realen Werkstücks (2) durch die Werkzeugmaschine ausführt.

9. Ermittlungsverfahren nach einem der obigen Ansprüche,
**dadurch gekennzeichnet,**
**dass** die erste Ortsauflösung mindestens fünfmal, besser mindestens zehnmal so fein wie die zweite Ortsauflösung ist.

10. Ermittlungsverfahren nach einem der obigen Ansprüche,
**dadurch gekennzeichnet,**
**dass** die zweite Ortsauflösung in zwei Raumrichtungen ein zweidimensionales Raster mit einem Rastermaß von mindestens 0,1 x 0,1 mm bildet.

11. Ermittlungsverfahren nach einem der obigen Ansprüche,
**dadurch gekennzeichnet,**
**dass** die erste Ortsauflösung im Falle eines eindimensionalen Rasters ein Rastermaß von höchstens 50 µm und im Falle eines zweidimensionalen Rasters ein Rastermaß von höchstens 50 x 50 µm aufweist.

12. Ermittlungsverfahren nach einem der obigen Ansprüche,
**dadurch gekennzeichnet,**
**dass** die Recheneinrichtung (8) von der Steuereinrichtung (4) für die Bearbeitungszeitpunkte (ti) zusätzlich Werte entgegennimmt, die für Lagefehler des realen Werkzeugs (1) relativ zum realen Werkstück (2) charakteristisch sind, und dass die Recheneinrichtung (8) den jeweiligen Lagefehler des realen Werkzeugs (1) relativ zum realen Werkstück (2) ermittelt und bei der Ermittlung, ob und gegebenenfalls in welchem Umfang das reale Werkzeug (1) zum jeweiligen Bearbeitungszeitpunkt (ti) auf eines der vorbestimmten Gebiete des realen Werkstücks (2) einwirkt, berücksichtigt.

13. Ermittlungsverfahren nach einem der obigen Ansprüche,
**dadurch gekennzeichnet,**
**dass** die Recheneinrichtung (8) von der Steuereinrichtung (4) für die Bearbeitungszeitpunkte (ti) zusätzlich ein Antriebsmoment (M') eines Spindelantriebs (5) entgegennimmt, mittels dessen eine das reale Werkzeug (1) haltende Spindel (1') rotiert wird, dass die Recheneinrichtung (8) das Antriebsmoment (M') des Spindelantriebs (5) zumindest den jeweiligen virtuellen Bereichen zuordnet, in denen das reale Werkzeug (1) zum jeweiligen Bearbeitungszeitpunkt (ti) auf eines der vorbestimmten Gebiete des realen Werkstücks (2) einwirkt, und dass die Recheneinrichtung (8) für diese Bereiche eine Aussage
über die Oberflächenqualität der Endkontur des realen Werkstücks (2) ermittelt und der Endkontur zuordnet.

14. Computerprogramm, das Maschinencode (10) umfasst, der von einer einer Steuereinrichtung (4) einer Werkzeugmaschine zugeordneten Recheneinrichtung (8) unmittelbar abarbeitbar ist, wobei die Abarbeitung des Maschinencodes (10) durch die Recheneinrichtung (8) bewirkt, dass die Recheneinrichtung (8) ein Ermittlungsverfahren nach einem der obigen Ansprüche ausführt.

15. Einer Steuereinrichtung (4) einer Werkzeugmaschine zugeordnete Recheneinrichtung, wobei die Recheneinrichtung mit einem Computerprogramm (9) nach Anspruch 15 programmiert ist, so dass sie im Betrieb ein Ermittlungsverfahren nach einem der Ansprüche 1 bis 14 ausführt.

16. Recheneinrichtung nach Anspruch 15,
**dadurch gekennzeichnet,**
**dass** sie mit der Steuereinrichtung (4) der Werkzeugmaschine identisch ist.
